# EUROPÄISCHE PATENTSCHRIFT

(11) **EP 3 347 193 B1**
(45) Veröffentlichungstag und Bekanntmachung des Hinweises auf die Patenterteilung: **18.11.2020**
(21) Anmeldenummer: 16751166.6
(22) Anmeldetag: 28.07.2016
(51) Int. Cl.: B29C 70/32

(54) **VERFAHREN ZUM HERSTELLEN EINES FMV-HYBRIDBAUTEILS UND FMV-HYBRIDBAUTEIL**
METHOD FOR PRODUCING A FIBER-MATRIX COMPOSITE (FMC) HYBRID COMPONENT, AND FMC HYBRID COMPONENT
PROCÉDÉ DE FABRICATION D'UNE PIÈCE HYBRIDE COMPOSITE FIBRE MATRICE ET PIÈCE HYBRIDE COMPOSITE FIBRE MATRICE

(30) Priorität: 10.09.2015 DE 102015011846
(43) Veröffentlichungstag der Anmeldung: 18.07.2018
(73) Patentinhaber: Daimler AG, 70372 Stuttgart (DE)
(72) Erfinder: REESE, Eckhard, 21641 Apensen (DE)
(74) Vertreter: JENSEN & SON
(86) Internationale Anmeldenummer: PCT/EP2016/001312
(87) Internationale Veröffentlichungsnummer: WO 2017/041869

(56) Entgegenhaltungen:
- DE-A1-102012 018 804

## Beschreibung

Die Erfindung betrifft ein Verfahren zum Herstellen eines FMV-Hybridbauteils und ein FMV-Hybridbauteil.

Aus der deutschen Offenlegungsschrift DE 10 2012 018 804 A1 ist ein Verfahren zum Herstellen eines Faser-Matrix-Verbund-Bauteils (FMV-Bauteil) bekannt, bei welchem ein Formschlauch mit einem FMV-Material umflochten oder umwickelt wird, wobei der Formschlauch nach Beheizung vorgeformt und in eine beheizte Pultrusionsform zugeführt wird. Danach wird der inzwischen verfestigte FMV-Werkstoff mittels Rotationszugbiegen unter Innenhochdruck umgeformt. Hiernach wird der Formschlauch gemeinsam mit dem FMV-Material mit Kunststoff umspritzt. Abschließend wird der Formschlauch aus dem fertigen Bauteil entfernt. Durch das mehrmalige Aufschmelzen des Thermoplastanteils am FMV-Werkstoff verliert dieser an Qualität, wobei insbesondere seine mechanischen Eigenschaften verschlechtert werden. Des Weiteren können hohe Umformgrade nicht realisiert werden. Die Entfernung des Formschlauchs ist problematisch, da bei größeren Umformungen aufgrund von Reibung zwischen dem FMV-Material und dem Formschlauch eine Schädigung des Formschlauchs und/oder des FMV-Materials kaum abzuwenden ist.

Das Verfahren zum Herstellen eines FMV-Hybridbauteils weist folgende Schritte auf: Es wird ein trockenes Hybridfasergarn auf ein verlorenes Kernelement aufgeflochten, sodass ein Hybridfasergeflecht auf dem Kernelement gebildet wird, und es wird ein Faser-Kern-Verbund erhalten. Der Faser-Kern-Verbund, welcher das Kernelement und das Hybridfasergeflecht aufweist, wird umgeformt, und das Hybridfasergeflecht wird auf dem Kernelement imprägniert und konsolidiert. Auf diese Weise wird ein FMV-Hybridbauteil erhalten, welches - dann in einstückiger Form - einerseits das konsolidierte Hybridfasergeflecht und andererseits das Kernelement aufweist. Das Kernelement verbleibt also in dem fertigen FMV-Hybridbauteil und stellt insoweit ein verlorenes Kernelement dar, als es dem FMV-Hybridbauteil nicht wieder entnommen und dem Produktionsprozess nicht wieder zugeführt wird. Vielmehr bildet es einen integralen Bestandteil des FMV-Hybridbauteils. Dadurch, dass ein trockenes Hybridfasergarn auf das Kernelement aufgeflochten wird, sind besonders hohe Umformgrade möglich, da so nicht nur eine Faserdehnung, sondern auch eine Strukturdehnung durch Verschieben der Flechtstruktur erzielbar ist. Es sind dabei Biegewinkel von weniger als 150° ohne weiteres erreichbar. Einzelne Fasern des Hybridfasergarns werden in diesem Zustand weniger gedehnt und somit entlastet. Daher lassen sich sogar Biegewinkel von 90° oder weniger bei geringen Biegeradien vorformen. Dagegen sind bereits fertig imprägnierte und/oder konsolidierte Halbzeuge nur unter großer Faserlängung und/oder Faserstauchung umformbar, sodass - wenn eine Beschädigung oder Vorschädigung eines solchen Halbzeugs vermieden werden soll, deutlich kleinere Umformgrade, das heißt insbesondere nur deutlich größere Biegewinkel, realisierbar sind.

Das Aufflechten des Hybridfasergarns erfolgt durch Flechtpultrusion. Dies stellt eine ebenso sichere wie einfache und kostengünstige Art des Aufflechtens eines trockenen Hybridfasergarns auf das verlorene Kernelement dar.

Unter dem Begriff "trocken" in Zusammenhang mit dem trockenen Hybridfasergarn wird insbesondere verstanden, dass dieses noch nicht imprägniert und/oder konsolidiert ist. Vielmehr weist das Hybridfasergarn ein Matrixmaterial in noch unaufgeschmolzener Form auf.

Unter dem Begriff "Hybridfasergarn" wird insbesondere ein Garn verstanden, welches sowohl ein Fasermaterial als auch ein Matrixmaterial aufweist. Dabei ist es gemäß einer Ausgestaltung möglich, dass das Hybridfasergarn einerseits Fasern eines Fasermaterials, nämlich Verstärkungsfasern, und andererseits Matrixfasern aus Matrixmaterial aufweist, wobei die Verstärkungsfasern und die Matrixfasern bevorzugt nebeneinander in einem Faserbündel oder Roving des Hybridfasergarns vorliegen.

Alternativ oder zusätzlich ist es möglich, dass das Hybridfasergarn beschichtete Verstärkungsfasern aufweist, welche mit Matrixmaterial beschichtet oder umhüllt sind.

Als Verstärkungsfasern können Glasfasern, Kohlenstofffasern, Aramidfasern, PBO-Fasern, Polyethylenfasern, Naturfasern, Basaltfasern, Quarzfasern, Aluminiumoxidfasern, Siliziumcarbidfasern, Metallfasern, Keramikfasern, andere geeignete Fasern, und/oder Mischformen verschiedener Fasern zum Einsatz kommen.

Als Matrixmaterial können Duroplaste, Thermoplaste, Elastomere, Füllstoffe, gesättigte oder ungesättigte Polyesterharze, Epoxidharze, Vinylesterharze, andere geeignete Materialien, insbesondere Kunststoffe, oder Mischformen solcher Materialien zum Einsatz kommen. Besonders bevorzugt wird als Matrixmaterial für das Hybridfasergarn ein Thermoplast verwendet, besonders bevorzug Polyamid oder PPA. Dabei sind Thermoplaste einerseits besonders gut zu verarbeiten und kostengünstig, und andererseits leicht zu rezyklieren.

Unter einem Faser-Matrix-Verbund wird insbesondere ein Fasergebilde verstanden, welches in eine Matrix eingebettet ist. Dabei wird das Fasergebilde von der Matrix umgeben, die durch Adhäsiv- oder Kohäsivkräfte an das Fasergebildet gebunden ist. Ein Faser-Matrix-Verbund (FMV) umfasst also insbesondere ein imprägniertes und konsolidiertes Fasergebilde.

Das Umformen des Faser-Kern-Verbunds wird mittels eines Mehrachsroboters durchgeführt, insbesondere mittels eines Mehrachsroboters, der eine Mehrzahl von Mikromehrachsrobotern -auf einer Trägerplatte angeordnet - mit Greifvorrichtungen aufweist. Diese können den Faser-Kern-Verbund entlang seiner Längsachse aufnehmen und fixieren. Weiterhin ist es mithilfe des Mehrachsroboters möglich, den Faser-Kern-Verbund simultan an allen vorgesehenen Biegestellen umzuformen, und so dem Faser-Kern-Verbund seinen endgültigen Verlauf in einem einzigen Schritt zu verleihen. Dafür sind an jeder Biegestelle zwei Greifvorrichtungen, insbesondere von Mikromehrachsrobotern, vorgesehen. Beim simultanen Umformen kann ein Großteil an Raum, der ansonsten für die Umformung benötigt wird, eingespart werden. Weiterhin wird die Prozesszeit deutlich reduziert. Die Greifvorrichtungen der Mikromehrachsroboter können zugleich auch als Handhabungsvorrichtungen bei weiteren Verfahrensschritten verwendet werden.

Der Erfindung liegt die Aufgabe zugrunde, ein Verfahren zum Herstellen eines FMV-Hybridbauteils und ein FMV-Hybridbauteil zu schaffen, wobei die genannten Nachteile nicht auftreten und eine mögliche Vorschädigung des Halbzeugs vermieden werden soll.

Die Aufgabe wird gelöst, indem die Gegenstände der unabhängigen Ansprüche geschaffen werden. Vorteilhafte Ausgestaltungen ergeben sich aus den Unteransprüchen.

Die Aufgabe wird insbesondere gelöst indem vorgesehen ist, dass zumindest das Hybridfasergarn und/oder zumindest das Kernelement magnetisch wirksame Teilchen aufweist/aufweisen, wobei der Faser-Kern-Verbund für das Umformen und/oder für das Imprägnieren und Konsolidieren induktiv erwärmt wird. Mittels der magnetisch wirksamen Teilchen ist in sehr einfacher, schneller und kostengünstiger Weise eine induktive Erwärmung des Faser-Kern-Verbundes möglich, wobei eine Beeinträchtigung der Werkstoffqualität vermieden werden kann. Dabei kann das induktive Erwärmen einerseits für das Umformen und andererseits alternativ oder zusätzlich für das Imprägnieren und Konsolidieren vorgesehen sein.

Als magnetisch wirksame Teilchen werden vorzugsweise elektrisch leitfähige Teilchen verwendet. Besonders bevorzugt werden als magnetisch wirksame Teilchen Nanopartikel verwendet, insbesondere ferritische Nanopartikel. Diese ermöglichen eine besonders effiziente induktive Umformung, weil sie keine Weißschen Bezirke, nämlich voneinander abgrenzbare magnetische Domänen, mehr aufweisen, sodass sie über besonders gute und ausgeprägte magnetische Eigenschaften verfügen.

Besonders bevorzugt ist vorgesehen, dass sowohl das Hybridfasergarn als auch das Kernelement solche magnetisch wirksamen Teilchen aufweist.

Gemäß einer Weiterbildung der Erfindung ist vorgesehen, dass in das Kernrohr endenseitig Stempel eingebracht werden, die a) als Teil einer Abdichtvorrichtung zum Aufbringen des stützenden Innendrucks dienen; b) im Kernrohr als Umformmatrize beim Umformen verwendet werden, und/oder c) als verlorene Stempel im FMV-Bauteil verbleiben, insbesondere als Buchse, besonders bevorzugt als UD-FMV-Buchse (Unidirektionale Faser-Matrix-Verbund-Buchse).

Der Innendruck kann bevorzugt mittels einer Abdichtvorrichtung aufgebracht werden, die einerseits die endenseitig in das Kernrohr eingebrachten Stempel und andererseits - pro Ende des Kernrohrs - eine Abdichteinheit aufweisen. Dabei wirkt jede Abdichteinheit mit einem Stempel zusammen, um das Kernrohr zu dichten und den stützenden Innendruck aufzubauen. Vorzugsweise weist jede Abdichteinheit wenigstens einen Anschluss auf, über welchen ein den stützenden Innendruck aufbringendes Fluid in ein Inneres des Kernrohrs eingeleitet werden kann. Besonders bevorzugt weist jede Abdichteinrichtung zwei Anschlüsse für zwei Druckleitungen, in denen das Fluid unter verschiedenem Druck vorliegt, auf. Dabei können mithilfe der zwei Druckleitungen wenigstens zwei verschiedene Drücke in verschiedenen Stadien des Verfahrens im Innern des Kernrohrs ausgebildet werden. In dem wenigstens einen Anschluss ist vorzugsweise ein Rückschlagventil angeordnet, sodass ein in dem Inneren des Kernrohrs herrschender stützender Innendruck aufrechterhalten werden kann, wenn die Abdichteinheit von einer Druckleitung getrennt wird.

Die Stempel dienen zusätzlich oder alternativ vorzugsweise als Umformmatrize beim Umformen, wobei sie insbesondere den Enden des Kernrohrs eine bestimmte, durch die Geometrie der Stempel vorgegebene Form verleihen. Dies ermöglicht eine Funktionsintegration in Hinblick auf die Stempel, wobei Zusatzbauteile vermieden werden können.

Zusätzlich oder alternativ verbleiben die verlorenen Stempel bevorzugt im FMV-Bauteil und dienen dort einer weiteren Funktion, besonders bevorzugt als Buchse, wobei sie vorzugsweise als unidirektionale Fasermatrix-Verbund-Buchse (UD-FMV-Buchse) ausgebildet sind. Dabei ist es beispielsweise möglich, in die Stempel Einsätze, sogenannte Inserts, einzubringen, um das entstandene FMV-Bauteil mit anderen Bauteilen, beispielsweise einer Kraftfahrzeug-Rohbau-Karosserie, zu verbinden. Solche Einsätze können beispielsweise Gewindeeinsätze oder andere zur Befestigung vorgesehene Einsätze sein. Auch können die Stempel selbst als solche Anbindungselemente ausgebildet sein, indem sie beispielsweise ein entsprechendes Gewinde aufweisen.

Die Stempel erfüllen bevorzugt eine mehrfache Funktion, sodass eine hohe Funktionsintegration innerhalb des Verfahrens gegeben ist, was dieses einfach, schnell durchzuführen und kostengünstig gestaltet.

Gemäß einer Weiterbildung der Erfindung ist vorgesehen, dass der Faser-Kern-Verbund in einem Endlos-Prozess kontinuierlich hergestellt wird. Dies ist insbesondere mittels Flechtpultrusion ohne weiteres möglich, wobei in einer besonders bevorzugten Ausgestaltung des Verfahrens zusätzlich vorgesehen ist, dass das Kernrohr in Fertigungsrichtung vor der Flechtpultrusionseinrichtung extrudiert und so - insbesondere in einem Endlos-Prozess - stets neu für das Verfahren hergestellt wird. Die Extrusionsanlage kann in vorteilhafter Weise in die Flechtpultrusionsanlage integriert vorgesehen sein.

Einzelne FMV-Hybridhalbzeuge werden bevorzugt von dem im Rahmen des Verfahrens gebildeten Endlos-Faser-Kern-Verbund abgelängt, wodurch in sehr einfacher Weise einzelne FMV-Hybridhalbzeuge für die weiteren Verfahrensschritte, insbesondere für die Umformung und das anschließende Imprägnieren und Konsolidieren erhalten werden können. Diese FMV-Hybridhalbzeuge liegen dann zunächst auch als Faser-Kern-Verbünde vor, die umgeformt und zu dem FMV-Hybridbauteil imprägniert und konsolidiert werden.

Das Ablängen wird vorzugsweise mittels wenigstens eines Laserstrahls durchgeführt, insbesondere mit einem Schneidlaser. Dies hat den Vorteil, dass Enden der entstehenden FMV-Hybridhalbzeuge durch den Laserstrahl aufgeschmolzen werden und nach dem Abkühlen endenseitig fest verbunden, insbesondere mit Matrixmaterial umsäumt sind. Dadurch kann vermieden werden, dass endenseitig einzelne Fasern oder Faserbündel von Verstärkungsfasern aus dem FMV-Hybridhalbzeug beziehungsweise dem Faser-Kern-Verbund herausstehen, und so entweder ein im Rahmen des Verfahrens verwendetes Werkzeug beschädigen können, oder selbst Anlass geben für eine Beschädigung des auszubildenden FMV-Hybridbauteils.

Gemäß einer Weiterbildung der Erfindung ist vorgesehen, dass entlang einer Längsachse des Faser-Kern-Verbunds Schweißpunkte gesetzt werden. Besonders vorteilhaft wird dies noch auf dem Endlos-Faser-Kern-Verbund vor dem Ablängen durchgeführt. Es ist aber alternativ oder zusätzlich auch möglich, Schweißpunkte an den bereits abgelängten FMV-Hybridhalbzeugen vorzusehen. Besonders bevorzugt werden die Schweißpunkte mittels wenigstens eines Laserstrahls gesetzt, wobei in vorteilhafter Weise der zum Ablängen verwendete Schneidlaser auch zum Setzen der Schweißpunkte verwendet werden kann. Es ist aber alternativ auch möglich, dass wenigstens ein separater Schweißlaser zum Setzen der Schweißpunkte verwendet wird.

Die Schweißpunkte haben den Vorteil, dass sie das auf das Kernelement aufgeflochtene Hybridfasergeflecht an dem Kernelement stellenweise fixieren können, sodass zwar weiterhin hohe Umformgrade beim Umformen erreichbar sind, weil das Hybridfasergeflecht flexibel bleibt, sich aber andererseits das Hybridfasergeflecht nicht in großem Maße und insbesondere global relativ zu dem Kernelement verschieben kann. Dabei dienen die Schweißpunkte insbesondere einer Transportsicherung des Hybridfasergeflechts auf dem Kernrohr, sodass sich das Hybridfasergeflecht beim Transport nicht verschieben kann.

Gemäß einer Weiterbildung der Erfindung ist vorgesehen, dass ein Kernrohr verwendet wird, das eine Mehrzahl von Schichten aufweist. Dabei kann ein mehrschichtiges Kernrohr in vorteilhafter Weise eine Mehrzahl verschiedener Funktionen zugleich erfüllen.

Bevorzugt weist das Kernrohr eine Außenschicht auf, die einen Kunststoff aufweist oder aus einem Kunststoff besteht, der chemisch einem Matrix-Kunststoff des Hybridfasergarns zumindest ähnlich ist. Besonders bevorzugt weist die Außenschicht einen Kunststoff auf, der dem Matrix-Kunststoff des Hybridfasergarns gleich oder mit diesem identisch ist. Auf diese Weise kann im Herstellungsprozess durch Verschweißen des Kernelements mit dem Hybridfasergeflecht ein Stoffschluss erreicht werden, sodass das Geflecht unverrückbar auf dem Kernelement gehalten wird. Außerdem ergibt sich beim Imprägnieren und Konsolidieren eine innige Verbindung zwischen dem Matrixmaterial des Hybridfasergeflechts einerseits und dem Kunststoff der Außenschicht andererseits, sodass ein integrales und insbesondere einstückiges FMV-Hybridbauteil aus dem Hybridfasergeflecht und dem Kernelement ausgebildet wird.

Alternativ oder zusätzlich weist das Kernrohr bevorzugt eine Innenschicht auf, die einen Kunststoff aufweist, der zumindest eine Eigenschaft aufweist, die ausgewählt ist aus einer Gruppe bestehend aus: Einer druckdichten Eigenschaft, insbesondere einer hochdruckdichten Eigenschaft, einer fluiddichten Eigenschaft, und einer höheren Glasübergangstemperatur und/oder einer höheren Schmelztemperatur als der Matrix-Kunststoff des Hybridfasergarns.

Unter einer druckdichten Eigenschaft wird dabei insbesondere eine Eigenschaft verstanden, welche die Innenschicht befähigt, den im Rahmen des Verfahrens aufgebrachten stützenden Innendruck aufzunehmen, ohne dabei eine Beschädigung oder Schwächung zu erleiden. Unter einer fluiddichten Eigenschaft wird insbesondere eine Eigenschaft verstanden, welche die Innenschicht befähigt, das zum Aufbringen des stützenden Innendrucks in das Innere des Kernelements eingebrachte Fluid aufzunehmen, ohne dabei eine Beeinträchtigung oder Beschädigung zu erleiden, und insbesondere ohne dass eine Leckage des Fluids nach außen auftritt.

Der stützende Innendruck dient vorzugsweise als Abstützung gegenüber dem Flechtdruck beim Aufflechten des Hybridfasergarns, zum Stützen beim Umformen, und/oder später zum Stützen gegenüber dem Konsolidierungsdruck.

Eine höhere Glasübergangstemperatur und/oder eine höhere Schmelztemperatur des Kunststoffs für die Innenschicht im Vergleich zu dem Matrixkunststoff des Hybridfasergarns ermöglicht eine prozessstabile Ausgestaltung des Kernelements auch beim Imprägnieren und Konsolidieren.

Als Kunststoff für die Außenschicht kann beispielweise PA oder PPA verwendet werden. Als Kunststoff für die Innenschicht kann beispielsweise PA6.6, PPA oder PEEK verwendet werden.

Die Innenschicht weist bevorzugt eine größere Stärke oder Dicke auf als die Außenschicht. Besonders bevorzugt ist die Innenschicht deutlich stärker oder dicker ausgestaltet als die Außenschicht.

Es ist möglich, dass das Kernrohr nur die Außenschicht und die Innenschicht aufweist, also aus zwei Schichten gebildet ist. Der Begriff Außenschicht bedeutet im Übrigen insbesondere, dass die Außenschicht radial außen an dem Kernrohr vorgesehen ist, wobei sie insbesondere eine radial äußerste Schicht des Kernrohrs bildet, wobei das Hybridfasergarn auf die Außenschicht des Kernrohrs aufgeflochten wird.

Die Innenschicht ist relativ zu der Außenschicht radial innen in dem Kernrohr angeordnet. Es kann sich dabei bei einer Ausgestaltung um die innerste Schicht des Kernrohrs handeln.

Alternativ oder zusätzlich ist es möglich, dass das Kernrohr eine innerste Schicht aufweist, die einen Kunststoff aufweist, der zumindest eine Eigenschaft aufweist, die ausgewählt ist aus einer Gruppe bestehend aus: Einer fluiddichten Eigenschaft, einer mediumbeständigen Eigenschaft, einer gleitfähigen Eigenschaft, und einer temperaturbeständigen Eigenschaft.

Es ist möglich, dass das Kernrohr nur zwei Schichten aufweist, nämlich die Außenschicht und die innerste Schicht. Dabei ist die innerste Schicht radial innerhalb der Außenschicht angeordnet.

Es ist aber insbesondere auch ein Ausführungsbeispiel möglich, bei dem das Kernrohr mindestens drei, vorzugsweise genau drei Schichten aufweist, nämlich radial außen die Außenschicht, radial innen die innerste Schicht, und zwischen der Außenschicht und der innersten Schicht - in radialer Richtung gesehen - die Innenschicht.

Unter einer mediumbeständigen Eigenschaft wird hier insbesondere eine Eigenschaft verstanden, die es der innersten Schicht ermöglicht, gegenüber Chemikalien, insbesondere gegenüber dem den stützenden Innendruck aufbringenden Fluid, und/oder gegenüber bei einer späteren Verwendung oder in einem weiteren Herstellungsschritt des FMV-Bauteils durchgeleiteten Chemikalien, beständig zu sein.

Eine gleitfähige Eigenschaft bedeutet bevorzugt, dass der Kunststoff, welchen die innerste Schicht aufweist, bessere Gleiteigenschaft aufweist als ein Kunststoff, der für die Außenschicht und/oder für die Innenschicht verwendet wird.

Eine temperaturbeständige Eigenschaft bedeutet insbesondere, dass der Kunststoff der innersten Schicht bis zu einer höheren Temperatur temperaturbeständig ist, als ein Kunststoff, der für die Außenschicht und/oder für die Innenschicht verwendet wird.

Als Kunststoff für die innerste Schicht wird/werden PPA. PEEK, PA6.6, strahlenvernetztes PA, oder ein kurzglasfaserverstärktes PA, insbesondere mit Kurzglasfasern im Umfang von 20 %, bevorzugt. Für die innerste Schicht ist auch eine geschäumte Eigenschaft möglich, die innerste Schicht also bevorzugt als geschäumte Schicht ausgebildet.

Besonders bevorzugt weist jede der Schichten des Kernrohrs magnetisch wirksame Teilchen auf, sodass das gesamte Kernrohr mit all seinen Schichten induktiv erwärmt und formbar erweicht werden kann.

Gemäß einer Weiterbildung der Erfindung ist vorgesehen, dass sowohl das Hybridfasergarn als auch das Kernelement magnetisch wirksame Teilchen aufweisen, wobei für das Hybridfasergarn eine geringere Konzentration von magnetisch wirksamen Teilchen verwendet wird als für das Kernelement. Es ist dann in vorteilhafter Weise möglich, zunächst - zum Zwecke des Umformens - mit einer vorzugsweise entsprechend angepassten Magnetfeldstärke eines induktiven Magnetfelds das Kernelement aufgrund seiner höheren Konzentration von magnetisch wirksamen Teilchen schnell auf eine Erweichungstemperatur aufzuheizen, ohne dabei bereits das Hybridfasergarn soweit zu erwärmen, dass es zu einer Imprägnierung oder zu einer Vorschädigung des Matrixmaterials aufgrund eines Aufschmelzens und Wieder-Erstarrens kommt.

Alternativ oder zusätzlich ist bevorzugt vorgesehen, dass für das Hybridfasergarn magnetisch wirksame Teilchen mit einer höheren Curie-Temperatur verwendet werden als für das Kernelement. Die Curie-Temperatur ist dabei insbesondere die Temperatur, bei welcher die magnetisch wirksamen Teilchen einen Phasenübergang erleiden und ihre magnetische Wirksamkeit verlieren. Es ist dann in vorteilhafter Weise möglich - insbesondere zum Zweck des Imprägnierens und Konsolidierens - spezifisch das Hybridfasergeflecht auf dem Kernelement induktiv zu heizen, wobei die Curie-Temperatur der magnetisch wirksamen Teilchen des Kernelements bereits überschritten ist, diese daher nicht mehr magnetisch wirksam sind, und entsprechend das Kernelement selbst nicht mehr aktiv geheizt wird.

Besonders bevorzugt wird, dass das Hybridfasergeflecht sowohl eine geringere Konzentration von magnetisch wirksamen Teilchen als das Kernelement, als auch magnetisch wirksame Teilchen mit einer höheren Curie-Temperatur als das Kernelement aufweist. In dieser Kombination ist in verschiedenen Verfahrensschritten jeweils eine selektive Erwärmung des Hybridfasergeflechts einerseits und des Kernelements andererseits möglich. Aufgrund der geringeren Konzentration an magnetisch wirksamen Teilchen in dem Hybridfasergarn wird beim Erwärmen zum Zwecke des Umformens das Kernelement deutlich schneller erhitzt als das Hybridfasergeflecht, wobei die Umformung vorgenommen werden kann, bevor der Thermoplastanteil des Hybridfasergeflechts schmelzen kann. Im Anschluss kann dann das Imprägnieren des Geflechts erfolgen, wobei vorzugsweise eine höhere Leistung an einem Induktor aufgebracht wird, welche nun den Thermoplastanteil des Hybridfasergeflechts aufschmilzt und die Verstärkungsfasern imprägniert. Dabei ist die Curie-Temperatur des Kernelements bereits überschritten, sodass dieses nicht weiter aufgewärmt wird. Ein mehrfaches Aufheizen, insbesondere Aufschmelzen, und Wieder-Erstarren verschiedener Bereiche des entstehenden FMV-Hybridbauteils wird so sehr effizient vermieden, sodass auch die damit einhergehenden Nachteile in Hinblick auf die Werkstoffqualität vermieden werden.

Gemäß einer Weiterbildung der Erfindung ist vorgesehen, dass das FMV-Hybridbauteil in einem Spritzgieß-Werkzeug mit wenigstens einer Anspritzung versehen wird. Dabei wird unter einer Anspritzung insbesondere eine im Wege des Spritzgießens angebrachte Geometrie verstanden, insbesondere ein durch Anspritzen angebrachtes Funktionselement. Unter einer Anspritzung wird dabei auch eine Umspritzung verstanden, wobei eine Umspritzung insbesondere eine voll-umfängliche Umspritzung eines Bereichs des FMV-Hybridbauteils anspricht, während eine Anspritzung nicht notwendig vollumfänglich erfolgt.

Als Spritzgießprozess kann in vorteilhafter Weise ein Metallpulverspritzgießprozess und/oder ein Kunststoffspritzgießprozess verwendet werden.

Insbesondere durch Anspritzen eines Kunststoffs, insbesondere eines thermoplastischen Kunststoffs, kann eine stoffschlüssige Verbindung zwischen dem angespritzten Kunststoff und dem Matrixmaterial des FMV-Hybridbauteils erreicht werden, was vorteilhaft für die Stabilität des fertigen Bauteils ist. Dabei wird vorzugsweise ein Kunststoff verwendet, der ähnlich ist zu dem Matrixkunststoff des FMV-Hybridbauteils, oder diesem gleich, oder mit diesem identisch.

Insgesamt wird durch das Anspritzen von Kunststoff letztlich ein Kunststoff-Kunststoff-Hybridbauteil erhalten, welches einerseits das FMV-Hybridbauteil und andererseits zusätzlich eine Kunststoffumspritzung aufweist.

Unter einem Hybridbauteil wird im Übrigen insbesondere ein Bauteil verstanden, welches aus mehreren, gegebenenfalls verschiedenen Komponenten ausgebildet ist, hier insbesondere aus dem Hybridfasergeflecht einerseits und dem Kernelement andererseits, sowie optional wenigstens einer zusätzlichen Anspritzung.

Alternativ oder zusätzlich ist bevorzugt vorgesehen, dass das FMV-Hybridbauteil mit wenigstens einem flächigen FMV-Halbzeug verbunden wird. Ein solches flächiges FMV-Halbzeug kann insbesondere ein Organoblech oder eine anderweitig vorzugsweise fertig beschnittene Platine aus einem FMV-Material sein. Auf diese Weise können weitere Funktionen, insbesondere Anbindungsflansche für weitere Bauteile, an dem FMV-Hybridbauteil vorgesehen werden.

Vorzugsweise wird das flächige FMV-Halbzeug in das Spritzgieß-Werkzeug eingelegt, in welches auch das FMV-Hybridbauteil zum Anbringen der wenigstens einen Anspritzung eingelegt wird. Dabei kann das Spritzgieß-Werkzeug zugleich dem Umformen und Anbinden des FMV-Halbzeugs an das FMV-Hybridbauteil dienen, insbesondere unterstützt durch den Schließdruck des Spritzgießwerkzeugs und/oder durch den Spritzdruck beim An- oder Umspritzen. Dabei ist es insbesondere möglich, dass auch das flächige FMV-Halbzeug zumindest bereichsweise umspritzt wird, um eine zusätzliche, verstärkte Anbindung an das FMV-Hybridbauteil zu erreichen. Auf diese Weise kann insgesamt ein sehr stabiles Kunststoff-Kunststoff-Hybridbauteil erhalten werden. Aufgrund des zusätzlichen, flächigen FMV-Halbzeugs ist dann das derart entstehende Bauteil insbesondere als FMV-FMV-Hybridbauteil ausgebildet.

Es ist aber auch möglich, dass der angespritzte Kunststoff faserverstärkt ist, insbesondere kurzfaserverstärkt, insbesondere kurzglasfaserverstärkt. Auch in diesem Fall wird selbstverständlich ein FMV-FMV-Hybridbauteil erhalten.

Die Aufgabe wird schließlich auch gelöst, indem ein FMV-Hybridbauteil geschaffen wird, welches hergestellt ist in einem Verfahren nach einer der zuvor beschriebenen Ausführungsformen. Dabei verwirklichen sich in Zusammenhang mit dem FMV-Hybridbauteil die Vorteile, die zuvor bereits in Zusammenhang mit dem Verfahren erläutert wurden.

Besonders bevorzugt ist vorgesehen, dass das FMV-Hybridbauteil als Frontendträger, insbesondere für ein Kraftfahrzeug, ausgebildet ist. Dabei verwirklichen sich in besonderer Weise die zuvor erläuterten Vorteile, zugleich kann Leichtbau für das Kraftfahrzeug betrieben werden, was insbesondere Betriebskosten und einen Kraftstoffverbrauch einsparen hilft.

Das wenigstens eine, flächige FMV-Halbzeug wird dabei insbesondere verwendet, um eine Z-Strebe für den Frontendträger auszubilden. Der Frontendträger weist also in seinem fertigen Zustand eine Z-Strebe auf, die durch wenigstens ein flächiges FMV-Halbzeug gebildet ist, welches - vorzugsweise in dem Spritzgießwerkzeug - mit dem FMV-Hybridbauteil verbunden ist.

Entsprechend wird eine Ausführungsform des zuvor erläuterten Verfahrens bevorzugt, bei welcher vorgesehen ist, dass ein Frontendträger, insbesondere für ein Kraftfahrzeug, als FMV-Hybridbauteil hergestellt wird.

Im Folgenden wird eine spezifische Ausführungsform des Verfahrens näher erläutert:
Ein Frontendträger, welcher mit dieser Ausführungsform des Verfahrens hergestellt wird, besteht aus einem FVK-Rohr (FVK - Faserverstärkter Kunststoff), welches mehrere Biegestellen aufweist und verschiedene Querschnitte besitzt. Für die Z-Strebe wird ein Organoblech verwendet, welches zur Hälfte um das Rohr gelegt und mit Kunststoffelementen umspritzt wird. Bei der Herstellung dieses Frontends aus einem Faserkunststoffverbund muss das FVK-Rohr bei der Herstellung mit einem Innendruck befüllt werden. Ist dieses FVK-Rohr noch nicht konsolidiert, würde das Druckmedium durch Lücken im Geflecht entweichen. Ein Kernrohr, um welches das Rohr geflochten wird, kann das Entweichen des Gases verhindern. In einem Endlosprozess wird auf das Rohr ein Hybridroving aus Kunststofffasern (z.B. aus PA, PPA, ...) und Verstärkungsfasern (z.B. Glas-, Carbon-, Aramidfasern) aufgeflochten. Als Ablängvorrichtung dient ein Laser. Dies hat den Vorteil, dass die Enden der FVK-Rohlinge aufgeschmolzen werden und nach dem Abkühlen starr dort verbunden sind. Damit können die geflochtenen Enden beim Transport und in weiteren Handlingeinrichtungen nicht ausfransen. Ebenfalls sollten der Länge nach Schweißpunkte auf dem Rohling verteilt werden, da sich beim Transport das Geflecht auf dem Kern verschieben kann. Das Geflecht (UD-Geflecht) wird auf ein Kernrohr aufgebracht, welches den Flechtdruck aufnimmt. Das Kernrohr hat einen mehrschichtigen Aufbau, wobei jede Schicht eine eigene Funktion erfüllt. Die oberste Schicht besteht aus einem Material, welches dem Matrixmaterial des FVK ähnlich ist. Diese wird im späteren Prozess mit dem FVK verschweißt. Darunter befindet sich eine deutlich dickere Schicht aus einem Hochleistungskunststoff. Dieser nimmt den Flecht- und Konsolidierungsdruck auf. Ebenfalls muss dieser Werkstoff eine hohe Glasübergangstemperatur besitzen, da er auch bei hohen Temperaturen nicht schmelzen darf. Die innerste Schicht ist eine Funktionsfläche, die verschiedene Aufgabe erfüllen kann, wie z.B. hohe Gasundurchlässigkeit, hohe Medienbeständigkeit, besondere Gleiteigenschaften oder noch eine extra Temperaturbeständigkeit. Jede dieser Schichten muss mit ferritischen Nanopartikeln gefüllt sein. Diese dienen später im Prozess zur Erwärmung des Kernrohrs. Da dieses im kalten Zustand steif ist, wird es durch Erwärmung biegeschlaff und lässt sich leichter umformen.

Der Curiepunkt (Curie-Temperatur) der Nanopartikel im Hybridgeflecht muss so eingestellt werden, dass die FVK-Matrix in der Imprägnierstation optimal aufgeschmolzen wird, aber nicht thermisch zerstört werden kann. Die Nanopartikel im Kernrohr müssen einen Curiepunkt besitzen, der den Kunststoff nicht aufschmilzt, ihn jedoch flexibel zum Umformen macht. Über die Partikelkonzentration wird das Timing des Prozesses optimiert. Umso höher die Konzentration im Kunststoff ist, desto schneller werden diese erhitzt. Die Konzentration im Hybridgeflecht ist deutlich geringer als im Kernrohr. Das hat zur Folge, dass beim Vorwärmen des Kunststoffs das Kernrohr schneller erhitzt wird. Ist die erforderliche Temperatur erreicht, wird der Generator abgestellt. Die Temperatur im Geflecht liegt durch die langsamere Erwärmung noch unter der Temperatur des Kernrohrs. Wird nun das Bauteil im Imprägnier- und Umform-Werkzeug erhitzt, wird die Leistung verglichen zum ersten Erwärmen deutlich erhöht. Somit erwärmt dich das Geflecht schneller und schmilzt auf. Da jedoch der Curiepunkt des Kernrohrs schon erreicht ist, erwärmt sich dieses nicht weiter.

Im Beispiel eines FVK-Frontends sind hohe Umformgrade zu realisieren. Bei fertig imprägnierten und konsolidierten Halbzeugen sind diese nur unter großer Faserlängung bzw. -stauchung realisierbar. Ein Rohr, welches noch nicht imprägniert und konsolidiert ist, lässt sich im Vergleich deutlich besser (Biegewinkel kleiner als 150°) umformen. Ergänzend zu der Faserdehnung (Dehnen der einzelnen Faser) verschiebt sich die Flechtstruktur (Strukturdehnung). Ergo wird die Faser weniger gedehnt und somit entlastet. Daher lassen sich Biegewinkel von 90° bei geringen Biegeradien vorformen. Der Querschnitt an diesen Biegestellen wird nach dem Umformen hoch-langoval.

Ein Roboter für den Biege-Vorform-Prozess besteht aus einem Hauptroboter, welcher die grobe Positionierung und das Handling zwischen den Prozessschritten übernimmt. Dieser Hauptroboter trägt eine Plattform, an der sich mehrere Mikromehrachsroboter befinden. Davon haben zwei Mikromehrachsroboter die Aufgabe, eine Abdichtvorrichtung aufzunehmen. Diese besteht aus einem Abdichtstempel (mittels Spritzguss hergestellt; verbleibt nach dem Prozess im Bauteil) und einer Abdichteinheit (wird nach dem Prozess entfernt und wieder der Produktion zugeführt). Der Abdichtstempel dient als Umformstempel. Am Anfang des Aufheizprozesses werden nur die FVK-Rohrenden aufgeheizt und die konisch zulaufenden Abdichtstempel werden eingeführt. Durch den spitz zulaufenden Abdichtstempel ändert sich die Geometrie der Rohrenden zu der Außengeometrie der Abdichtstempel. Gleichzeitig kann über seitliche Einpressstempel eine in den Abdichtstempel integrierte UD-Buchse in die FVK-Rohrenden eingebracht werden, um Anbindungsmöglichkeiten zu schaffen. Die Dichtflächen, die das Entweichen des Druckes verhindern, werden an die FVK-Rohrinnenseite und Stirnseite geschweißt. Die Abdichteinheit hat die Aufgabe, die Abdichtstempel zu führen. Ebenfalls schaltet die Abdichteinheit zwischen verschiedenen Drücken. Um den Druck ins Innere des FVK-Rohres zu leiten, muss der Abdichtstempel eine Durchführung haben, welche den Druck durch den ganzen Stempel führt.

Der Abdichteinheit (mit Abdichtstempel) werden zwei Druckzuleitungen bereitgestellt. Eine Leitung weist einen Druck von 1 bar bis 6 bar auf. Die Druckleitung verläuft entlang des Roboters zur Drucklufthausversorgung. Die zweite Leitung stellt einen Druck von bis zu 600 bar bereit (diese Leitung läuft im Inneren des kombinierten Innenhochdruckumform-Spritzgieß-Werkzeugs).

Diese wird verwendet, um ein sehr schnelles und exaktes Erhöhen des Drucks zu ermöglichen, was benötigt wird, um den Spritzdruck der Spritzgussmaschine zu kompensieren.

Wirkt der Stützdruck, bevor der Spritzdruck kommt, wird das Rohr in die Kavitäten gedrückt und droht zu bersten. Ein zu spätes Wirken des Stützdrucks hat zufolge, dass das Rohr eingedrückt wird, und die Schmelze entweicht in den so entstehenden Raum. Dies hat zufolge, dass die angespritzten Funktionsflächen nicht sauber gefüllt werden. In den Anschlüssen an der Abdichteinheit befinden sich integrierte Rückschlagventile, die entsperrt werden, wenn die Druckleitung angeschlossen ist. Somit wird gewährleistet, dass der Druck beim Abkoppeln der Mikromehrachsroboter trotzdem aufrecht gehalten wird.

Des Weiteren befinden sich auf der Trägerplatte Mikromehrachsroboter mit Greifvorrichtungen (Greifroboter). Diese sind dazu vorgesehen, das Rohr entlang der Längsachse aufzunehmen und zu fixieren. Zusätzlich haben sie die Aufgabe, das Rohr umzuformen. Die Greifer bestehen aus zwei Halbschalen (Formgreifer), welche das Rohr umschließen. Es können sich Vorrichtungen an den Formgreifern befinden, die ermöglichen, dass diese schnell vom Roboter gelöst und am Werkzeug fixiert werden können. Dies sind z.B. kleine Stifte, welche eine Nut aufweisen, in die Haken eingreifen können. Bevor der Spritzgießprozess startet, werden die Formgreifer von dem Roboter gelöst und im Werkzeug fixiert.

Die kalten Halbzeuge befinden sich vor dem Prozess in einer Lager-Einheit, in der sie automatisiert für den Prozess vorbereitet werden. In dieser automatisierten Vorbereitung rollen zunächst FVK-Rohre in eine Vorwärmstation. In der Vorrichtung befinden sich drei Induktoren, die ein elektromagnetisches Wechselfeld erzeugen, welches im Bereich der Rohrenden deutlich an Intensität zunimmt. In diesem Feld werden die Nanopartikel im Kernrohr- und Flechtrohrwerkstoff sehr schnell umgepolt.

Durch die Ummagnetisierungsverluste entsteht Wärme, welche den Kunststoff flexibel macht. Durch das stärkere magnetische Feld an den FVK-Rohrenden werden diese Bereiche schneller aufgewärmt. Die biegesteifen Bereiche in der Mitte stabilisieren dabei die FVK-Rohrenden.

Nachdem die Erweichungstemperatur der des Kernrohrs erreicht wurde, fahren seitlich die Abdichtstempel in die Rohrenden, werden verschweißt und formen den Querschnitt um. Sind die Abdichtstempel fest im FVK-Rohr verschweißt, wird ein Druck von 1,5 bar in das Innere des FVK-Rohrs geleitet. Simultan wird der Rest des FVK-Rohrs erwärmt und auf eine Temperatur erhitzt, bei dem sich das Kernrohr leicht verformen lässt. Nun entnehmen die Mikromehrachsroboter den biegeweichen Rohling und fahren ein Programm ab, welches simultan alle Biegestellen umformt und am Ende dem Rohr seinen endgültigen Verlauf gibt (die Querschnitte des Rohres werden nur im Bereich der Formgreifer umgeformt, der Rest erfolgt in der Imprägnier- und Umformstation). Dafür benötigt es an jeder Biegestelle zwei Formgreifer mit Roboter. Das simultane Umformen hat den Vorteil, dass ein Großteil an Raum gespart wird. Wird jede Biegestelle nacheinander in einer CNC-Rohrbiegeanlage umgeformt, schwenkt das frei schwebende Ende des FVK-Rohres mit großen Radien aus. Ebenfalls wird die Prozesszeit deutlich reduziert.

Die Greifer legen den Rohling nun in ein Induktions-Umformwerkzeug, welches die Negativform des späteren Bauteils aufweist. Die Greif- und Abdichtroboter trennen sich nun von dem FVK-Rohr. Die Abdichteinheiten sowie die Formgreifer bleiben am FVK-Rohr. Mit dem Schließen der Werkzeughälften (lokal ggf. über Schieber) werden die Querschnitte des Rohres umgeformt und das Rohr bekommt seine fast endgültige Geometrie. Nun wird es über Induktion weiter aufgeheizt. Spulen in den Werkzeughälften erzeugen ein elektromagnetisches Wechselfeld. Durch Ummagnetisierungsverluste in den ferritischen Nanopartikeln heizen sich der Kunststoff im Geflecht und das Kernrohr volumetrisch innerhalb sehr kurzer Zeit auf. Zu diesem Zeitpunkt sollte sich im Inneren des Kernrohrs ein Innendruck von 6-10 bar (je nach Wanddicke, Homogenität des Hybridrovings, ...) befinden. Dieser fördert das Imprägnieren. Gleichzeitig verschweißt dieser die äußere kunststoffgleiche oder ähnliche Oberschicht des Kernrohrs mit dem Rohrgeflecht.

Wenn das fast fertig geformte FVK-Rohr auf eine (Entformungs-)Temperatur abgekühlt ist, bei der sich die Geometrie im darauf folgendem Handling nicht mehr verliert (z.B. für PA ca. 180°C), jedoch im Spritzgussprozess noch eine ausreichende Verbundhaftung erzielt wird (die Temperatur bei der die heiße Schmelze die Oberschicht aufschmilzt und ein Stoffschluss entstehen kann), kann es vom Roboter erneut entnommen werden und zur Spritzgussmaschine überführt werden.

Beim Handling zwischen den Prozessschritten sollte der Druck auf ein Minimum (ungefähr 1-1,5 bar) reduziert werden, sodass das Rohr noch genügend Stabilität besitzt, jedoch eine Querschnittsausdehnung minimal gehalten wird. Im letzten Prozessschritt wird das Bauteil in ein Innenhochdruckumform-Spritzgieß-Werkzeug (IHU-SG-Werkzeug) eingelegt und mit Funktionselementen umspritzt. Die Kavität muss einen größeren Innendurchmesser aufweisen (ca. 0,1 mm) als das vorherige Werkzeug, da der Stützdruck auf bis zu 600 bar erhöht werden muss, und somit eine Ausdehnung des Rohres erfolgt. Nach dem Abkühlen auf Entformungstemperatur (für einen Glasfaser-PA-Verbund ca. 150 °C) kann der Roboter das FVK-Rohr entnehmen und direkt das nächste fertig geformte Rohr einlegen.

Nach dem IHU-SG-Prozess müssen an den Rohrenden, wo sich die UD-Buchsen befinden, Bohrungen gefräst werden, um die Anbindung zu realisieren. Um die Prozesszeit zu optimieren, muss der Imprägniervorgang so starten, dass zwischen Ende des Aufheizens und Anfang des Spritzgussprozesses möglichst wenig Zeit verstreicht. Es genügt daher, dass der Prozess mit einem Roboter durchläuft. Der Spritzgießprozess benötigt am meisten Zeit. Somit sollten alle anderen Prozesse innerhalb dieser Taktzeit durchlaufen, um die gesamte Durchlaufzeit zu minimieren. Wenn der Roboter ein Rohr in die Spritzgießmaschine eingelegt hat, startet die Prozesskette von vorne. Das Umformen und Imprägnieren/Konsolidieren geschieht somit parallel zum Spritzgussprozess. Dies ermöglicht die schnelle volumetrische Erwärmung durch die Induktion.

Im Rahmen des hier vorgeschlagenen Verfahrens können Herstellkosten reduziert werden, insbesondere durch Reduzierung von Logistik-, Energie- und Investitionskosten. Die Materialqualität kann infolge einer Reduktion von oxidativen Prozessen durch einmaliges Erhitzen der verschiedenen Halbzeuge erhöht werden. Die Kosten werden weiterhin durch Schweißintegration der Stempel der Abdichtvorrichtung im Wege der Funktionsintegration verringert. Das hergestellte FMV-Hybridbauteil ist einfach rezyklierbar, insbesondere wenn es in bevorzugter Ausgestaltung nur aus thermoplastischen Kunststoffen und Glasfasern besteht. Das Verfahren stellt insbesondere einen skalierbaren, großserienfähigen und flexiblen Serienprozess dar, der auch für Querträger, Crashelemente, Drehstäbe, Dachspriegel und Biegeträger eines unteren Stoßfängers verwendet werden kann.

Die Erfindung wird im Folgenden anhand der Zeichnung näher erläutert.

Dabei zeigen:
- Fig. 1: eine schematische Darstellung von Details einer Ausführungsform des Verfahrens;
- Fig. 2: eine weitere Detaildarstellung einer bevorzugten Ausführungsform des Verfahrens;
- Fig. 3: eine schematische Darstellung der Funktionsweise einer Abdichtvorrichtung im Rahmen einer bevorzugten Ausführungsform des Verfahrens;
- Fig. 4: eine schematische Querschnittsdarstellung eines im Rahmen des Verfahrens bevorzugt verwendeten Kernrohrs, und
- Fig. 5: eine schematische Darstellung eines Ausführungsbeispiels eines FMV-Hybridbauteils.

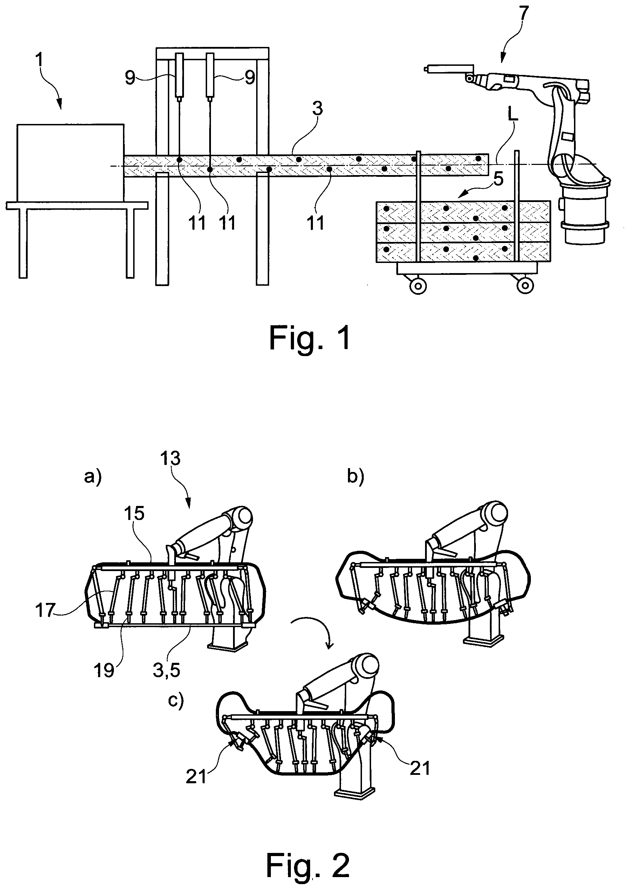

Figur 1 zeigt eine schematische Detaildarstellung einer Ausführungsform eines Verfahrens zum Herstellen eines FMV-Hybridbauteils. Dabei ist hier schematisch eine Flechtpultrusionsanlage 1 dargestellt, mittels der ein trockenes Hybridfasergarn auf ein verlorenes Kernelement aufgeflochten wird, wobei ein Hybridfasergeflecht auf dem verlorenen Kernelement gebildet wird, und wobei ein Faser-Kern-Verbund 3 erhalten wird. Dieser Faser-Kern-Verbund 3 wird hier in einem Endlos-Prozess kontinuierlich hergestellt, wobei einzelne FMV-Hybridhalbzeuge 5 als Faser-Kern-Verbünde von dem Endlos-Faser-Kern-Verbund 3 abgelängt werden, hier insbesondere mittels eines Schneidlasers 7. Dabei schmilzt der Schneidlaser 7 zugleich die Enden der FMV-Hybridhalbzeuge 5 auf und verschmilzt diese, wobei er sie insbesondere umsäumt, sodass keine einzelnen Verstärkungsfasern endenseitig aus den FMV-Hybridhalbzeugen 5 vorstehen.

Mittels Schweißlasern 9 werden entlang einer Längsachse L des Faser-Kern-Verbunds 3 Schweißpunkte 11, von denen hier der besseren Übersichtlichkeit wegen nur einige mit dem Bezugszeichen 11 gekennzeichnet sind, gesetzt, welche das Hybridfasergeflecht bereichsweise auf dem Faser-Kern-Verbund 3 - insbesondere zum Zwecke einer Transportsicherung gegen Verschieben des Hybridfasergeflechts relativ zu einem nicht dargestellten Kernelement - fixieren.

Figur 2 zeigt eine schematische Darstellung eines weiteren Details einer bevorzugten Ausführungsform des Verfahrens. Gleiche und funktionsgleiche Elemente sind mit gleichen Bezugszeichen versehen, sodass insofern auf die vorangegangene Beschreibung verwiesen wird. Dabei wird hier ein FMV-Hybridhalbzeug 5, das zugleich einen Faser-Kern-Verbund 3 darstellt, von einem Mehrachsroboter 13 - wie bei a) dargestellt - gehalten, wobei der Mehrachsroboter 13 eine Plattform 15 trägt, an der eine Mehrzahl von Mikromehrachsrobotern 17, von denen der besseren Übersichtlichkeit wegen hier nur einer mit dem Bezugszeichen 17 gekennzeichnet ist, angeordnet ist, wobei jedem Mikromehrachsroboter 17 ein Greifer 19 zugeordnet ist. Die Mikromehrachsroboter 17 halten mit ihren Greifern 19 den Faser-Kern-Verbund 3.

Bei b) und c) ist dargestellt, dass die Mikromehrachsroboter 17 durch - vorzugsweise gesteuerte oder geregelte - Relativverlagerung zueinander nun den Faser-Kern-Verbund umformen, insbesondere durch Biegen. Dabei erfolgt die Umformung simultan an allen für den Faser-Kern-Verbund 3 vorgesehenen Biegestellen, was sowohl Raum als auch Zeit spart.

In einem nicht dargestellten Verfahrensschritt wurde zuvor der Faser-Kern-Verbund 3 zu einem biegeschlaffen Zustand erwärmt, um von den Mikromehrachsrobotern 17 umgeformt werden zu können.

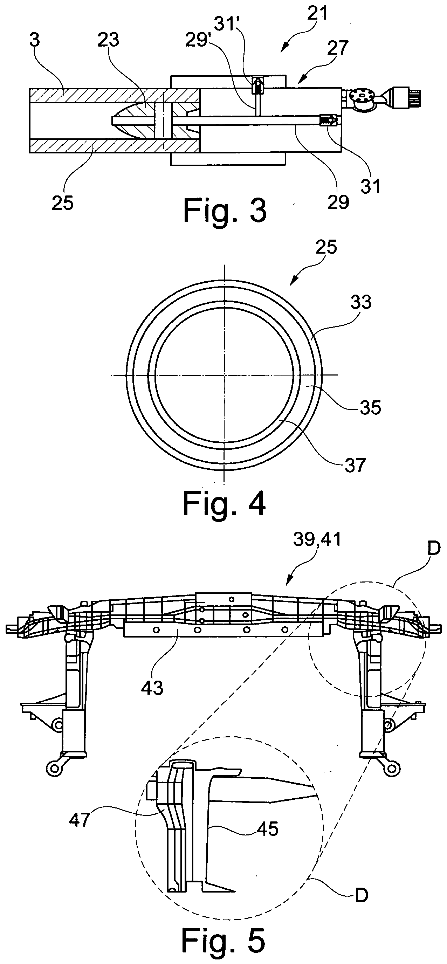

Ein als Kernelement verwendetes Kernrohr wird unter einen stützenden Innendruck gesetzt, damit es beim Umformen nicht kollabiert. Hierzu ist insbesondere eine Abdichtvorrichtung 21 vorgesehen, die in Figur 3 näher erläutert wird. Jede Abdichtvorrichtung 21 wird vorzugsweise von einem Mehrachsroboter 17 gehalten.

Figur 3 zeigt eine schematische Detaildarstellung einer Ausführungsform des Verfahrens. Dabei ist hier die Abdichtvorrichtung 21 an einem Ende des Faser-Kern-Verbunds 3 dargestellt. Bevorzugt weist der Faser-Kern-Verbund 3 allerdings an seinen beiden, einander in Längsrichtung des Faser-Kern-Verbunds 3 gesehen gegenüberliegenden Enden jeweils die hier dargestellten Elemente der Abdichtvorrichtung 21 auf.

Die Abdichtvorrichtung 21 weist einen Stempel 23 auf, der endenseitig in ein Kernrohr 25 des Faser-Kern-Verbunds 3 eingebracht ist. Der Stempel 3 weist bevorzugt wenigstens eine Durchgangsbohrung zur Durchleitung eines den stützenden Innendruck aufbringenden Fluids auf. Der Stempel 3 dient zugleich als Umformmatrize beim Umformen des Faser-Kern-Verbunds 3, und er verbleibt weiterhin als verlorener Stempel in dem fertigen FMV-Hybridbauteil, wobei er insbesondere als Buchse dient, vorzugsweise als UD-FMV-Buchse.

Die Abdichtvorrichtung 21 weist außerdem eine Abdichteinheit 27 auf, welche mit dem Faser-Kern-Verbund 3 und dem Stempel 23 dicht verbindbar ist, allerdings bevorzugt an einer Vorrichtung zur Durchführung des Verfahrens verbleibt und insoweit nicht verloren ist.

Die Abdichteinheit 27 weist wenigstens eine Bohrung zur Durchleitung eines den stützenden Innendruck aufbringenden Fluids auf. Dabei sind hier zwei Anschlüsse 29, 29' für Druckleitungen vorgesehen, wobei in den Anschlüssen jeweils Rückschlagventile 31, 31' angeordnet sind, die dazu dienen, den stützenden Innendruck aufrechterhalten zu können, auch wenn die Anschlüsse 29, 29' von den Druckleitungen getrennt werden. Ein erster Anschluss 29 dient dabei beispielsweise der Verbindung mit einer Druckleitung, die unter einem Druck von mindestens 1 bar bis höchstens 6 bar steht. Der zweite Anschluss 29' dient bevorzugt dem Anschluss an eine Druckleitung, welche unter einem Druck von 600 bar steht. Durch - insbesondere wechselweises - Verbinden des Inneren des Faser-Kern-Verbunds 3 mit den Verschiedenen Druckleitungen können sehr schnell und einfach verschiedene Drücke in verschiedenen Stadien des Verfahrens zum Herstellen des FMV-Hybridbauteils als stützende Innendrücke in dem Faser-Kern-Verbund 3 eingestellt werden. Dabei dient ein niedrigerer Druck vorzugsweise zum Stützen bei der Umformung, wobei ein höherer Druck bevorzugt dem Stützen in einem nachgelagerten Spritzgießprozess in einem Spritzgießwerkzeug dient, um den Spritzdruck aufnehmen zu können.

Die Abdichteinheiten 27 können insbesondere anstelle eines Greifers 19 oder als Greifer 19 an jeweils einem Mikromehrachsroboter 17 vorgesehen sein. Sie dienen dann zugleich einer Halterung des Faser-Kern-Verbunds 3 an dem Mehrachsroboter 13.

Figur 4 zeigt eine schematische Querschnittsdarstellung eines Ausführungsbeispiels des Kernrohrs 25, welches bevorzugt als Kernelement verwendet wird. Dabei wird hier deutlich, dass das Kernrohr 25 bei diesem Ausführungsbeispiel genau drei verschiedene Schichten aufweist, nämlich eine Außenschicht 33, eine Innenschicht 35, und eine innerste Schicht 37. Dabei weist die Außenschicht 35 einen Kunststoff auf, der chemisch ähnlich zu einem Matrix-Kunststoff des Hybridfasergeflechts oder mit diesem identisch ist. Die Innenschicht 35 weist einen Kunststoff auf, der zumindest eine Eigenschaft aufweist, die ausgewählt ist aus einer Gruppe bestehend aus einer druckdichten Eigenschaft, einer fluiddichten Eigenschaft, und einer höheren Glasübergangstemperatur und/oder einer höheren Schmelztemperatur als sie der Matrix-Kunststoff des Hybridfasergeflechts aufweist. Die innerste Schicht 37 weist einen Kunststoff auf, der wenigstens eine Eigenschaft aufweist ausgewählt aus einer Gruppe bestehend aus einer fluiddichten Eigenschaft, einer mediumbeständigen Eigenschaft, einer gleitfähigen Eigenschaft, und einer temperaturbeständigen Eigenschaft. Auf diese Weise können verschiedene Funktionen für die verschiedenen Schichten vorgesehen sein, sodass auch das Kernrohr 25 eine Mehrzahl verschiedener Funktionen innerhalb des Faser-Kern-Verbunds 3 und gegebenenfalls innerhalb des fertigen FMV-Hybridhalbzeugs 5 übernehmen kann.

Als Kunststoff für das Matrixmaterial des Hybridfasergeflechts und als Kunststoff für die Außenschicht wird/werden insbesondere PA und/oder PPA bevorzugt. Als Kunststoff für die Innenschicht 35 wird/werden PA6.6, PPA oder PEEK bevorzugt. Als Kunststoff für die innerste Schicht wird/werden PPA, PEEK, PA6.6, strahlenvernetztes PA, oder ein kurzglasfaserverstärktes PA, insbesondere mit Kurzglasfasern im Umfang von 20 %, bevorzugt. Für die innerste Schicht 37 ist auch eine geschäumte Eigenschaft möglich, die innerste Schicht 37 also bevorzugt als geschäumte Schicht ausgebildet.

Vorzugsweise weisen sowohl das Hybridfasergeflecht als auch das Kernelement, insbesondere das Kernrohr 25, magnetisch wirksame Teilchen auf, wobei der Faser-Kern-Verbund 3 für das Umformen und auch für das Imprägnieren und Konsolidieren induktiv erwärmt wird.

Als magnetisch wirksame Teilchen sind insbesondere ferritische Nanopartikel vorgesehen.

Weiterhin ist bevorzugt vorgesehen, dass das Hybridfasergeflecht eine geringere Konzentration von magnetisch wirksamen Teilchen aufweist, als das Kernelement, insbesondere als das Kernrohr 25, wobei zugleich die magnetisch wirksamen Teilchen für das Hybridfasergeflecht eine höhere Curie-Temperatur aufweisen als die magnetisch wirksamen Teilchen für das Kernelement, insbesondere das Kernrohr 25.

Vorzugsweise weist das Kernrohr 25 in allen seinen Schichten 33, 35, 37 magnetisch wirksame Teilchen auf.

Figur 5 zeigt eine schematische Darstellung eines Ausführungsbeispiels eines FMV-Hybridbauteils 39, das im Rahmen einer Ausführungsform des zuvor beschriebenen Verfahrens hergestellt ist. Das FMV-Hybridbauteil 39 ist hier als Frontendträger 41 für ein Kraftfahrzeug ausgebildet. Es weist dabei eine Mehrzahl von Anspritzungen und/oder Umspritzungen 43 auf, von denen der besseren Übersichtlichkeit wegen hier nur eine schematisch mit dem Bezugszeichen 43 bezeichnet ist. Diese Anspritzungen und/oder Umspritzungen 43 werden bevorzugt in einem Spritzgießwerkzeug an dem FMV-Hybridbauteil vorgesehen.

In einer Detailansicht D ist eine Z-Strebe 45 des Frontendträgers 41 dargestellt, welche gebildet ist, indem ein flächiges FMV-Halbzeug 47 in dem Spritzgießwerkzeug um das FMV-Hybridbauteil 39 gelegt wird, wobei es durch den Schließdruck des Spritzgießwerkzeugs und/oder durch den Spritzdruck umgeformt und an das FMV-Hybridbauteil 39 angeformt wird. Vorzugsweise wird dabei auch das flächige FMV-Halbzeug 47, welches vorzugsweise als Organoblech ausgebildet ist, zumindest bereichsweise mit Kunststoff umspritzt, was die Anbindung des FMV-Halbzeugs 47 an das FMV-Hybridbauteil 39 weiter verbessert.

Insgesamt zeigt sich, dass mittels des Verfahrens ein FMV-Hybridbauteil 39 prozesssicher mit geringem Aufwand und zugleich bei sehr hohen Umformgraden schadlos herstellbar ist.

## Patentansprüche

1. Verfahren zum Herstellen eines FMV-Hybridbauteils (39), mit folgenden Schritten:
- Aufflechten eines trockenen Hybridfasergarns auf ein Kernelement, wobei ein Hybridfasergeflecht gebildet wird, und Erhalten eines Faser-Kern-Verbunds (3);
- Umformen des Faser-Kern-Verbunds (3), und
- Imprägnieren und Konsolidieren des Hybridfasergeflechts auf dem Kernelement
wobei der Faser-Kern-Verbund (3), welcher als verlorenes Kernelement im FMV-Hybridbauteils (39) verbleibt, in einem Endlos-Prozess kontinuierlich hergestellt wird, wobei einzelne FMV-Hybridhalbzeuge als Faser-Kern-Verbünde (3) von dem Endlos-Faser-Kern-Verbund (3) abgelängt werden nachdem das Aufflechten, Umformen sowie Imprägnieren und Konsolidieren erfolgt ist
**dadurch gekennzeichnet, dass**
zumindest das Hybridfasergarn und/oder zumindest das Kernelement magnetisch wirksame Teilchen aufweist/aufweisen, wobei der Faser-Kern-Verbund (3) für das Umformen und/oder für das Imprägnieren und Konsolidieren induktiv erwärmt wird.

2. Verfahren nach Anspruch 1,
**dadurch gekennzeichnet, dass**
in das Kernrohr (25) endenseitig Stempel (23) eingebracht werden, die
a) als Teil einer Abdichtvorrichtung (21) zum Aufbringen des stützenden Innendrucks dienen; und/oder
b) im Kernrohr (25) als Umformmatrize beim Umformen verwendet werden, und/oder
c) als verlorene Stempel im FMV-Hybridbauteil (39) verbleiben, insbesondere als Buchse, vorzugsweise als UD-FMV-Buchse.

3. Verfahren nach Anspruch 1, **dadurch gekennzeichnet, dass** einzelne FMV-Hybridhalbzeuge als Faser-Kern-Verbünde (3) von dem Endlos-Faser-Kern-Verbund (3) mittels wenigstens eines Laserstrahls abgelängt werden.

4. Verfahren nach einem der vorhergehenden Ansprüche, **dadurch gekennzeichnet, dass** Schweißpunkte (11) entlang einer Längsachse des Faser-Kern-Verbunds (3) gesetzt werden.

5. Verfahren nach einem der vorhergehenden Ansprüche, **dadurch gekennzeichnet, dass** ein Kernrohr (25) verwendet wird, das eine Mehrzahl von Schichten aufweist, bevorzugt:
a) eine Außenschicht (33), die einen Kunststoff aufweist, der chemisch einem Matrixkunststoff des Hybridfasergarns zumindest ähnlich, vorzugsweise gleich ist; und/oder
b) eine Innenschicht (35), die einen Kunststoff aufweist, der zumindest eine Eigenschaft aufweist, ausgewählt aus einer Gruppe bestehend aus: einer druckdichten Eigenschaft, einer fluiddichten Eigenschaft, und einer höheren Glasübergangstemperatur und/oder einer höheren Schmelztemperatur als sie der Matrixkunststoff des Hybridfasergarns aufweist; und/oder
c) eine innerste Schicht (37), die einen Kunststoff aufweist, der wenigstens eine Eigenschaft aufweist, ausgewählt aus einer Gruppe bestehend aus: einer fluiddichten Eigenschaft, einer mediumbeständigen Eigenschaft, einer gleitfähigen Eigenschaft, und einer temperaturbeständigen Eigenschaft.

6. Verfahren nach einem der vorhergehenden Ansprüche, **dadurch gekennzeichnet, dass** sowohl das Hybridfasergarn als auch das Kernelement magnetisch wirksame Teilchen aufweisen, wobei für das Hybridfasergarn
a) eine geringere Konzentration von magnetisch wirksamen Teilchen verwendet wird als für das Kernelement, und/oder
b) magnetisch wirksame Teilchen mit einer höheren Curie-Temperatur verwendet werden als für das Kernelement.

7. Verfahren nach einem der vorhergehenden Ansprüche, **dadurch gekennzeichnet, dass** das FMV-Hybridbauteil
a) in einem Spritzgieß-Werkzeug mit wenigstens einer Anspritzung (43) versehen wird, und/oder
b) mit wenigstens einem flächigen FMV-Halbzeug (47) verbunden wird.

8. FMV-Hybridbauteil, hergestellt in einem Verfahren nach einem der Ansprüche 1 bis 7, wobei das FMV-Hybridbauteil (39) bevorzugt als Frontendträger für ein Kraftfahrzeug ausgebildet ist.

## Claims

1. Method for producing a fibre-matrix composite (FMC) hybrid component (39), comprising the following steps:
- the braiding of a dry hybrid fibre yarn onto a core element, thereby forming a hybrid fibre mesh, and the obtaining of a fibre/core composite (3);
- the reshaping of the fibre/core composite (3); and
- the impregnation and consolidation of the hybrid fibre mesh on the core element,
wherein the fibre/core composite (3), which remains in the FMC hybrid component (39) as a lost core element, is produced continuously in a continuous process, wherein individual FMC hybrid pre-products are cut from the continuous fibre/core composite (3) as fibre/core composites (3) after the braiding, reshaping, impregnation and consolidation have been completed,
**characterised in that**
at least the hybrid fibre yarn and/or at least the core element has/have magnetically active particles, wherein the fibre/core composite (3) is inductively heated for the reshaping and/or for the impregnation and consolidation.

2. Method according to claim 1,
**characterised in that**
at the ends of the core tube (25), dies (23) are introduced which
a) act as part of a sealing device (21) for providing the supporting internal pressure; and/or
b) are used in the core tube (25) as reshaping dies in the reshaping process; and/or
c) remain in the FMC hybrid component (39) as lost dies, in particular as a sleeve, preferably as a UD FMC sleeve.

3. Method according to claim 1, **characterised in that** the individual FMC hybrid pre-products are cut from the continuous fibre/core composite (3) as fibre/core composites (3) by means of at least one laser beam.

4. Method according to any of the preceding claims, **characterised in that** welding spots (11) are set along a longitudinal axis of the fibre/core composite (3).

5. Method according to any of the preceding claims, **characterised in that** a core tube (25) having a plurality of layers is used, preferably
a) an outer layer (33) having a plastic material that is chemically at least similar and preferably equal to a matrix plastic material of the hybrid fibre yarn; and/or
b) an inner layer (35) having a plastic material that has at least one property selected from a group consisting of a pressure-tight property, a fluid-tight property and a higher glass transition temperature and/or a higher melting temperature than the matrix plastic material of the hybrid fibre yarn; and/or
c) an inner layer (37) having a plastic material that has at least one property selected from a group consisting of a fluid-tight property, a medium-resistant property, a slidable property and a temperature-resistant property.

6. Method according to any of the preceding claims, **characterised in that** both the hybrid fibre yarn and the core element have magnetically active particles, wherein for the hybrid fibre yarn
a) a lower concentration of magnetically active particles is used than for the core element, and/or
b) magnetically active particles with a higher Curie temperature are used than for the core element.

7. Method according to any of the preceding claims, **characterised in that** the FMC hybrid component
a) is provided with at least one injection (43) in an injection mould, and/or
b) is joined to a planar FMC pre-product (47).

8. FMC hybrid component, produced using a method according to any of claims 1 to 7, wherein the FMC hybrid component (39) is preferably designed as a front end member for a motor vehicle.

## Revendications

1. Procédé de fabrication d'un composant hybride à composite fibres-matrice (39), avec les étapes suivantes :
- tressage d'un fil de fibres hybrides sec sur un élément de noyau, dans lequel un tissage de fibres hybrides est formé, et obtention d'un composite fibres-noyau (3) ;
- façonnage du composite fibres-noyau (3), et
- imprégnation et consolidation du tissage de fibres hybrides sur l'élément de noyau,
dans lequel le composite fibres-noyau (3) qui reste comme élément de noyau perdu dans le composant hybride à composite fibres-matrice (39) est fabriqué en continu dans un processus sans fin, dans lequel des demi-produits hybrides à composite fibres-matrice individuels sont coupés à longueur du composite fibres-noyau sans fin (3) comme composites fibres-noyau après que le tressage, le façonnage ainsi que l'imprégnation et la consolidation ont eu lieu,
**caractérisé en ce que**
au moins le fil de fibres hybrides et/ou au moins l'élément de noyau présente(nt) des particules efficaces magnétiquement, dans lequel le composite fibres-noyau (3) est chauffé par induction pour le façonnage et/ou pour l'imprégnation et la consolidation.

2. Procédé selon la revendication 1,
**caractérisé en ce que**
des poinçons (23) sont introduits du côté de l'extrémité dans le tube de noyau (25), lesquels
a) servent de partie d'un dispositif d'étanchéification (21) pour l'application de la pression interne de support ; et/ou
b) sont utilisés dans le tube de noyau (25) comme matrice de façonnage lors du façonnage, et/ou
c) restent comme poinçons perdus dans le composant hybride à composite fibres-matrice (39), notamment comme douille, de préférence comme douille à composite fibres-matrice unidirectionnel.

3. Procédé selon la revendication 1, **caractérisé en ce que** des demi-produits hybrides à composite fibres-matrice individuels sont coupés à longueur du composite fibres-noyau sans fin (3) comme composites fibres-noyau (3) au moyen d'au moins un rayon laser.

4. Procédé selon une des revendications précédentes, **caractérisé en ce que** des points de soudure (11) sont posés le long d'un axe longitudinal du composite fibres-noyau (3).

5. Procédé selon une des revendications précédentes, **caractérisé en ce qu'**un tube de noyau (25) est utilisé, lequel présente une pluralité de couches, de préférence :
a) une couche externe (33) qui présente un plastique qui est au moins similaire, de préférence identique, chimiquement à un plastique de matrice du fil de fibres hybrides ; et/ou
b) une couche interne (35) qui présente un plastique qui présente au moins une propriété, sélectionnée parmi un groupe constitué de : une propriété étanche à la pression, une propriété étanche au fluide, et une température de transition vitreuse supérieure et/ou une température de fusion supérieure à celles que présente le plastique de matrice du fil de fibres hybrides ; et/ou
c) une couche la plus interne (37) qui présente un plastique qui présente au moins une propriété, sélectionnée parmi un groupe constitué de : une propriété étanche au fluide, une propriété résistante à un milieu, une propriété glissante et une propriété résistante à la température.

6. Procédé selon une des revendications précédentes, **caractérisé en ce qu'**aussi bien le fil de fibres hybrides que l'élément de noyau présentent des particules efficaces magnétiquement, dans lequel pour le fil de fibres hybrides
a) une concentration inférieure de particules efficaces magnétiquement à celle pour l'élément de noyau est utilisée, et/ou
b) des particules efficaces magnétiquement avec une température de Curie supérieure à celle pour l'élément de noyau sont utilisées.

7. Procédé selon une des revendications précédentes, **caractérisé en ce que** le composant hybride à composite fibres-matrice
a) est pourvu d'au moins une injection (43) dans un moule pour injection, et/ou
b) est connecté à au moins un demi-produit à composite fibres-matrice plan (47).

8. Composant hybride à composite fibres-matrice, fabriqué dans un procédé selon une des revendications 1 à 7, dans lequel le composant hybride à composite fibres-matrice (39) est de préférence réalisé comme support avant pour un véhicule à moteur.
